# EUROPÄISCHE PATENTSCHRIFT

(11) **EP 2 165 821 B1**
(45) Veröffentlichungstag und Bekanntmachung des Hinweises auf die Patenterteilung: **26.12.2012**
(21) Anmeldenummer: 09170749.7
(22) Anmeldetag: 18.09.2009
(51) Int. Cl.: B29C 70/50, B29C 70/14

(54) **Verfahren und Vorrichtung zum Herstellen von einem faserverstärkten Verbundwerkstoff und die Verwendung des faserverstärkten Verbundwerkstoffs**
Method and apparatus for producing a fibre-reinforced composite material and the use of the fibre-reinforced composite material
Procédé et dispositif pour la fabrication d'un matériau composite renforcé par des fibres et utilisation du composite renforcé par des fibres

(30) Priorität: 22.09.2008 DE 102008048334
(43) Veröffentlichungstag der Anmeldung: 24.03.2010
(73) Patentinhaber: Universität Bremen, 28359 Bremen (DE)
(72) Erfinder: Dommes, Henrik, Dipl.-Ing., 28209 Bremen (DE); Purol, Holger, Dipl.-Ing., 27446 Selsingen (DE)
(74) Vertreter: Tappe, Udo

(56) Entgegenhaltungen:
- EP-A2- 0 110 026
- EP-A2- 0 330 960
- EP-A2- 0 410 678
- DE-B- 1 179 357
- GB-A- 2 332 872
- US-A- 3 684 645
- US-A- 6 025 285

## Beschreibung

Die Erfindung betrifft ein Verfahren und eine Vorrichtung zum Herstellen eines faserverstärkten Verbundwerkstoffes, bei dem ein Fasermaterial bereit gestellt wird, bei dem eine Polymerfolie bereit gestellt wird, und bei dem das Fasermaterial der Polymerfolie zugeordnet wird.

Fernen betrifft die Erfindung die Verwendung des hergestellten Verbund wirkstoffes zum Herstellen eines Laminates und/order eines faserverstärkten Bauteils.

Aus der US 6 025 285 A ist ein Prepreg-Verfahren bekannt, bei dem Fasern zunächst mit einem Polymerpulver imprägniert werden und die anschließend mittels eines elektrischen Feldes ausgerichtet werden.

Die GB 2 332 872 A beschreibt ebenfalls ein Prepreg-Verfahren, bei dem Prepreg-Streifen mittels eines vibrierenden Siebes ausgerichtet werden.

Aus der EP 0 330 960 A2 und EP 0 110 026 A2 sind faserverstärkte Verbundwerkstoffe bekannt, die aus Prepreg-Materialien hergestellt werden.

Bei einem Verfahren, das als so genannte Folienimprägnierung (film stacking) bekannt ist, liegt ein Thermoplastpolymer in Folienform vor. Das Fasermaterial, welches beispielsweise als Gewebe oder Gelege vorliegt, und die Polymerfolie werden abwechselnd aufeinander geschichtet. Im Anschluss an eine Imprägnierung erfolgt aufgrund eines Aufheiz- und Konsolidierungsschrittes die eigentliche Benetzung des Fasermaterials mit dem Thermoplastpolymer. Somit erfolgt bei der Folienimprägnierung die Imprägnierung der Fasern des Fasermaterials erst während des Herstellungsprozesses eines Bauteiles. Hierbei ist von Nachteil, dass aufgrund einer inhomogeneren Polymerverteilung große Konsolidierungsdrücke und -zeiten notwendig sind.

Alternativ hierzu sind Verfahren bekannt, bei denen die Fasern des Fasermaterials bereits vor dem eigentlichen Herstellungsprozess eines Bauteiles imprägniert werden. So werden beispielsweise bei der Prepregtechnologie Kohlenstofffasern bereits vor der Verarbeitung zu einem Bauteil mit einem nicht ausgehärtetem Matrixwerkstoff imprägniert. Hierbei ist der Matrixwerkstoff ein Duroplastmaterial. Nachteilig ist allerdings, dass durch die fortschreitende Aushärtung des Matrixwerkstoffes die Haltbarkeit der Prepregs trotz Lagerung im Kühlraum begrenzt ist. Des Weiteren ist es notwendig, dass zur Bauteilfertigung jede Lage einzeln aufzubringen ist. Die anschließende Aushärtung im Autoklav ist mit weiteren zeitaufwendigen Arbeitsschritten verbunden. Somit ist dieses Verfahren zeit- und kostenintensiv.

Des Weiteren sind Nasslaminierungsverfahren bekannt, bei denen trockene Fasern erst während der Fertigung des Bauteiles mit dem Matrixwerkstoff kombiniert werden. Hierbei ist von Nachteil, dass bei Zuschnitten der trockenen Gewebe und Gelege Verschnitt- und Abfallmaterial des Fasermaterials anfällt, welches in der Regel entsorgt wird.

Darüber hinaus ist es bekannt, dass endlose Kohlenstofffasern in thermoplastischen Matrizen in Gewebeform zu so genannten "Organoblechen" verarbeitet werden. Zunächst wird das Fasermaterial in der Form eines Gewebes hergestellt- Für den hierfür erforderlichen Webprozess sind die Fasern zum Schutz vor Beschädigungen mit einer Schlichte umgeben. Diese Schlichte wird vor der Imprägnierung mit der Schmelze eines Matrixwerkstoffes durch ein nasschemisches Verfahren entfernt. Darauf werden die getrockneten Gewebe mit der thermoplastischen Schmelze imprägniert. Hierbei besteht die Gefahr, dass die Bindungspunkte des Gewebes nicht vollständig mit dem Matrixmaterial imprägniert werden. Nach der Imprägnierung werden die Gewebe zu Laminaten aufgebaut und mittels einer Doppelband- oder Intervall-Heißpresse konsolidiert. Nachteilig sind hierbei der aufwendige Herstellungsprozess der Organobleche und die teuren Ausgangsmaterialien. Hierdurch wird der mögliche Anwendungsbereich, insbesondere auf den Bereich der Luftfahrt, beschränkt. Weiter ist von Nachteil, dass Organobleche lediglich mittels Pressverfahren zu den endgültigen Bauteilen verarbeitbar sind.

Weiter sind Recycling-Verfahren bekannt, bei denen Fasermaterialreste, beispielsweise aus einem Nasslaminierungsverfahren, wiederverwertet werden. So ist es bekannt, Endlosfaser je nach Anwendung auf eine mittlere Länge von 0,2 mm bis 0,5 mm zu mahlen. Diese Kurzfasem, also Fasern mit einer Länge von weniger als 1 mm können thermoplastischen Kunststoffen als Verstärkungsmaterial beigemischt werden.

Nachteilig bei den bekannten Recycling-Verfahren ist, dass die Wiederverwertung von Langfasern, also Fasern mit einer Länge größer als 1 mm, bisher nicht zufrieden stellend gelöst ist. Das Fasermaterial wird im Rahmen der bekannten Recyclingverfahren einem Schredder zugeführt und hierdurch sehr stark beansprucht. Hierdurch besteht die Gefahr, dass die Schlichte abplatzt und sich Fasern, die länger als 1 mm sind, beispielsweise verknoten. Hierdurch entstehen Agglomerationen, also Faserverknäulungen, die die Verarbeitung erschweren und die spätere Bauteilqualität verringern. Zudem fransen die Faserenden aus, so dass die wirksame verstärkende Faserlänge reduziert wird. Weiter ist bekannt, Faserrnaterlalreste mittels zweier Messer auf Längen zwischen 30 mm und 70 mm zu schneiden und anschließend in einer Mühle zu Rovings und Filamenten aufzulösen. Die hierdurch entstehenden Langfasern werden zusammen mit einer Thermoplastmatrix zu Langfasergranulaten verarbeitet, die dann für ein Spritzgussverfahren eingesetzt werden. Hierbei besteht die Gefahr, dass im Bauteil unterschiedliche Faserlängen vorhanden sind, so dass eine optimale Verstärkung nicht erreicht wird. Weiterhin ist eine Orientierung der Fasern im Bauteil in Belastungsrichtung nur sehr bedingt einstellbar.

Das der Erfindung zu Grunde liegende Problem ist es, ein Verfahren der Eingangs genannten Art derart weiter zu entwickeln, dass einerseits ein hochwertiger faserverstärkter Verbundwerkstoff auf einfache und kostengünstige Weise herzustellen ist und andererseits eine Wiederverwertung von Fasermaterial aus Langfasem realisierbar ist.

Zur Lösung des der Erfindung zu Grunde liegenden Problems ist das Verfahren der Eingangs genannten Art dadurch gekennzeichnet, dass das Fasermaterial in der Ausbildung als einzelne Fasern mit einem Ausrichtförderelement mittels Vibrationen ausgerichtet wird, und dass das der Polymerfolie zugeführte Fasermaterial mittels eines Imprägnierelementes imprägniert wird. Weiter wird das der Erfindung zu Grunde liegende Problem gelöst durch eine Vorrichtung zum Herstellen eines faserverstärkten Verbundwerkstoffes nach dem erfindungsgemäßen Verfahren mit einem Fasermaterialmodul zum Aufbringen eines Fasermaterials auf eine Polymerfolie, wobei das Fasermaterialmodul ein mit einer Vibrationstechnik ausgestattetes Ausrichtförderelement mit in Längsrichtung zur Hauptförderrichtung ausgerichteten Vibrationsrinnen zum Ausrichten des als einzelne Fasern ausgebildeten Fasermaterials aufweist, und ein dem Fasermaterialmodul nachgeschaltetes Imprägnierelement vorgesehen ist, wobei die Polymerfolie nach Zuführung des Fasermaterials das Imprägnierelement durchläuft.

Somit wird eine, insbesondere vollständig ausgebildete, Polymerfolie mit ausgerichteten einzelnen Fasern belegt. Demnach sind konventionelle Folien verarbeitbar, wobei keine speziellen Kenntnisse und/oder Fertigkeiten, insbesondere im Bereich der Imprägnierung und/oder der Herstellung von Trägerfolien beispielsweise mittels Extrusion, zum Herstellen des Verbundwerkstoffes notwendig sind. Hierdurch wird die Herstellung von faserverstärkten Verbundwerkstoffen erheblich vereinfacht und vergünstigt.

Vorzugsweise wird das Fasermaterial der sich aufgrund der Herstellung noch im Schmelzezustand befindenden Polymerfolie zugeführt. Somit wird das Fasermaterial unmittelbar dem Herstellungsprozess der Polymerfolie zugeordnet. Das Fasermaterial wird aufgrund der sich noch im Schmelzezustand befindenden Polymerfolie von dem Polymermaterial umschlossen. Gleichzeitig erfolgt eine Imprägnierung des Fasermaterials. Während bisher die Herstellung des Fasermaterials, die Herstellung der Polymerfolie und das Zusammenführen des Fasermaterials und der Polymerfolie zu einem faserverstärktem Verbundwerkstoff drei eigenständige und vollständig voneinander getrennte Verfahrensschritte darstellten, erfolgt nun das Zusammenführen des Fasermaterials und der Polymerfolie zum Herstellen des faserverstärktem Verbundwerkstoffes bereits im Rahmen der Herstellung der Polymerfolie. Hierdurch ergibt sich ein kostengünstigeres Herstellungsverfahren für faserverstärktes Verbundwerkstoffe. Der hierbei entstehende faserverstärkte Verbundwerkstoff wird als so genannte "Organofolie" bezeichnet. Diese Organofolie ist als ein Halbzeug flexibel und damit leicht weiterzuverarbeiten. Die Organofolie lässt sich nach der Herstellung beispielsweise zu Rollen aufwickeln und damit einfach lagern und/oder transportieren. Des Weiteren kann die Organofolie direkt nach der Herstellung zu Laminaten weiterverarbeitet werden. Im Vergleich zu Organoblechen sind beispielsweise die Anlagenkosten für die Herstellung von Organofolien geringer. Weiter ist das Herstellungsverfahren weniger aufwendig und damit kostengünstiger. Somit sind Organofolien insgesamt deutlich günstiger als beispielsweise Organobleche. Darüber hinaus ermöglicht das erfindungsgemäße Verfahren bzw. die erfindungsgemäße Vorrichtung die Verwendung von Fasermaterialresten, insbesondere von Langfasern. Somit ergeben sich aufgrund der Verwendung von Fasermaterialresten, beispielsweise aus Nasslaminierungsverfahren, erheblich geringere Materialkosten. Aufgrund der geringeren Kosten ergeben sich zudem neue Einsatzbereiche für faserverstärkte Verbundwerkstoffe. Darüber hinaus sind Organofolien, im Gegensatz beispielsweise zu Organoblechen, im Pressverfahren und Tiefziehverfahren verarbeitbar. Insbesondere durch die Verarbeitung im Tiefziehverfahren ergeben sich kostengünstigere Verarbeitungsprozesse zum Herstellen von faserverstärkten Bauteilen.

Nach einer weiteren Ausführungsform des erfindungsgemäßen Verfahrens wird die Polymerfolie mittels einer Extrusion hergestellt und durch eine Düse, insbesondere eine Breitschlitzdüse gepresst. Die Herstellung einer Polymerfolie mittels eines solchen Extrusionsvefahrens ist seit langem bekannt und gewährleistet somit die Herstellung einer qualitativ hochwertigen Polymerfolie. Vorzugsweise wird das Fasermaterial unmittelbar nach dem Erzeugen der Polymerfolie, insbesondere direkt nach dem Austritt aus der Düse, auf die Polymerfolie aufgebracht. In diesem Zustand der Herstellung der Polymerfolie befindet sich die Polymerfolie noch im Schmelzezustand.

Hierdurch dringt das Fasermaterial in das Polymermaterial der Folie ein, wird von diesem umschlossen und/oder durchdrungen. Damit wird das Fasermaterial bereits im Rahmen der Herstellung der Polymerfolie dieser zugeführt. Hierdurch ergibt sich ein besonders effizientes und kostengünstiges Herstellungsverfahren, welches zudem die Herstellung von neuartigen qualitativ hochwertigen faserverstärkten Verbundwerkstoffen ermöglicht.

Vorzugsweise wird eine Zwischenfixierung des ausgerichteten Fasermaterials auf der Polymerfolie, insbesondere vor dem Imprägnieren mittels des Imprägnierelementes, mittels Adhäsion, elektrostatisch oder mittels eines Sprühklebers erreicht. Hierdurch wird eine unerwünschte Lageänderung der einzelnen Fasern während der Herstellung des Verbundwerkstoffes vermieden und die Realisierung eines qualitativ hochwertigen Verbundwerkstoffes begünstigt.

Entsprechend einer Weiterbildung wird das Fasermaterial zunächst klassifiziert, insbesondere manuell gesichtet. Vor allem bei der Verwendung von Fasermaterialresten gewährleistet eine Klassifizierung des Fasermaterials die gewünschte Qualität des Endproduktes in Gestalt des faserverstärkten Verbundwerkstoffes bzw. des hieraus zu erstellenden Bauteils.

Gemäß einer weiteren Ausführungsform wird das Fasermaterial einem Förderelement, insbesondere einem Förderband, zugeführt. Aufgrund des Zuführens des Fasermaterials wird das Fasermaterial unmittelbarer Bestandteil des Herstellungs-und/oder Bereitstellungsprozesses der Polymerfolie. Vorzugsweise wird das Fasermaterial manuell und/oder automatisch, insbesondere in Längsrichtung zur Förderrichtung des Förderelementes, ausgerichtet. Hierdurch ist gewährleistet, dass das Fasermaterial den nachfolgenden Herstellungsschritten in einer möglichst geeigneten Positionierung zugeführt wird. Insbesondere bei einer Orientierung der Fasern des Fasermaterials in Längsrichtung zur Förderrichtung des Förderelementes wird der Aufwand für nachfolgende Ausrichtungsschritte erheblich reduziert. Eine automatische Ausrichtung des Fasermaterials kann beispielsweise unter Verwendung einer Bilderkennung erfolgen.

Entsprechend einer Weiterbildung wird das Fasermaterial mittels eines Trennelementes, insbesondere einer Schnittwalze, in Faserabschnitte zugeschnitten, wobei vorzugsweise die Faserabschnitte Faserlängen größer als etwa 10 mm, besonders bevorzugt als etwa 50 mm, und am meisten bevorzugt als etwa 100 mm aufweisen. Hierdurch ist gewährleistet, dass der Polymerfolie gleichartiges Fasermaterial zugeführt wird, wodurch eine gleich bleibende Qualität des Verbundwerkstoffes realisierbar ist. Insbesondere bei der Verwendung von Fasermaterialresten ist durch den Zuschnitt der gegebenenfalls unterschiedlich großen Fasermaterialstücke eine gleich bleibende Qualität gegeben. Sofern das Material vor dem Zuschnitt ausgerichtet worden ist, ergeben sich zu dem nur geringe Schnittabfälle. Vorzugsweise werden Schnittabfälle mittels eines Separationselementes, insbesondere eines Siebes, aussortiert. Somit ist gewährleistet, dass nur gleichartiges Fasermaterial der Polymerfolie zugeführt wird. Die Schnittabfälle können anderen Anwendungen, insbesondere den bekannten Recyclingverfahren für Kurzfasern, zugeführt werden.

Gemäß einer Weiterbildung wird das Fasermaterial, insbesondere das Gewebe-und/oder Gelegematerial, mittels eines Vibrationselementes zu einzelnen Fasern, insbesondere Filamenten und/oder Rovings, aufgelöst. Hierdurch ist es möglich, sowohl neuwertiges Gewebe- und/oder Gelegematerial als auch entsprechende Restmaterialien mittels geeigneter Vibrationen zu Fasern zu vereinzeln. Erst aufgrund der Vereinzelung von Gewebe- und/oder Gelegematerialien ist der Einsatz von Fasermaterialresten realisierbar.

Nach einer weiteren Ausführungsform wird das Fasermaterial, insbesondere die einzelnen Fasern, mit dem Ausrichtförderelement mittels Vibrationen, insbesondere unidirektional, ausgerichtet und/oder befördert. Somit ist einerseits gewährleistet, dass das Fasermaterial entsprechend einer gewünschten Vorzugsrichtung ausgerichtet wird und andererseits wird das Fasermaterial zugleich in Richtung des nächsten Verfahrensschrittes befördert. Vorzugsweise wird das Fasermaterial von dem Ausrichtförderelement auf die Polymerfolie aufgebracht. Somit erfolgt die Übergabe des Fasermaterials an die Polymerfolie mittels des Ausrichtförderelementes, wobei aufgrund des ausgerichteten Fasermaterials gewährleistet ist, dass das Fasermaterial im Wesentlichen unidirektional auf die Polymerfolie aufgebracht wird. Wenn sich die Polymerfolie noch im Schmelzezustand befindet, sinkt das Fasermaterial in die Polymerfolie hinein und wird von dem Polymermaterial umgeben.

Das der Polymerfolie zugeführte Fasermaterial wird mittels eines Imprägnierelementes, insbesondere einer Doppelbandpresse, imprägniert. Somit ist eine vollständige Imprägnierung des Fasermaterials gewährleistet.

Gemäß einer Weiterbildung wird aus dem faserverstärkten Verbundwerkstoff ein Laminat aus zwei oder mehreren Lagen hergestellt, wobei vorzugsweise das Laminat anschließend konsolidiert wird. Je nach vorgesehenem Verwendungszweck kann das Laminat aus einer unterschiedlichen Anzahl von Lagen und mit unterschiedlichen Vorzugsrichtungen für das Fasermaterial hergestellt werden.

Vorzugsweise wird zum Herstellen der Polymerfolie ein Thermoplastmaterial, insbesondere Polypropylen und/oder Polyamid, verwendet. Polypropylen ist als Thermoplastmaterial seit langem bekannt und daher günstig in der Beschaffung. Des Weiteren bietet Polypropylen hinsichtlich der Verarbeitung und der Faserhaftung gute Eigenschaften. Polyamid weist gegenüber Polypropylen noch bessere Eigenschaften wie beispielsweise eine höhere Zugfestigkeit auf. Darüber hinaus können aber auch andere geeignete Thermoplastmaterialen verwendet werden.

Weiter können als Fasermaterial aus Langfasern bestehende Filamente, Rovings, Gewebe- und/oder Gelegematerialien verwendet werden, wobei die Langfasern insbesondere länger als etwa 10 mm, besonders bevorzugt als etwa 50 mm, und am meisten bevorzugt als etwa 100 mm lang sind. Somit ist das erfindungsgemäße Verfahren geeignet sowohl neuwertige Fasermaterialien als auch wiederzuverwertende Fasermaterialreste aus Langfasern zu verarbeiten. Somit ist von besonderem Vorteil, dass zum Wiederverwerten auch Fasermaterialreste, insbesondere Gewebereste und/oder Gelegereste, als Fasermaterial verwendet werden können.

Bei einer Weiterbildung des Verfahrens werden zum Wiederverwerten von Fasermaterialresten, insbesondere Geweberesten und/oder Gelegeresten, diese mittels eines Trennelementes in Faserabschnitte, vorzugsweise mit einer Größe von mindestens etwa 10 mm x 10 mm, besonders bevorzugt von mindestens 50 mm x 50 mm, und am meisten bevorzugt von mindestens 100 mm x 100 mm, zugeschnitten und die Fasermaterialreste mittels eines Vibrationselementes zu einzelnen Fasern aufgelöst. Hierbei können Schnittabfälle mittels eines Separationselementes aussortiert werden und/oder die Fasermaterialreste, insbesondere die einzelnen Fasern, können mit einem Ausrichtförderelement ausgerichtet und/oder befördert werden.

Vorzugsweise werden als Fasermaterial Glasfasern, Kohlefasern oder Aramidfasern verwendet. Weiter kann lediglich bestimmten Segmenten der Polymerfolie das Fasermaterial zugeführt werden. Hierdurch ist in den faserfreien Segmenten eine bessere Umformbarkeit realisiert.

Vorzugsweise ist dem Fasermaterialmodul gemäß der erfindungsgemäßen Vorrichtung ein Extruder zum Herstellen einer Polymerfolie zugeordnet. Somit ist ein an sich bekannter und damit bewährter Extruder dahingehend ergänzt, dass mittels des Fasermaterialmoduls ein Fasermaterial der sich aufgrund der Herstellung noch im Schmelzezustand befindenden Polymerfolie zuführbar ist. Somit wird der Herstellungs-und Bereitstellungsprozess der Polymerfolie zu einem Herstellungsverfahren für einen faserverstärkten Verbundwerkstoff erweitert.

Nach einer weiteren Ausführungsform der erfindungsgemäßen Vorrichtung weist das Fasermaterialmodul ein Förderelement, insbesondere ein Förderband, auf. Mittels des Förderelementes ist das Fasermaterial dem Fasermaterialmodul für die weitere Verarbeitung zuführbar. Vorzugsweise weist das Fasermaterialmodul ein Positionierungselement zum automatischen Ausrichten des Fasermaterials auf.

Hierdurch kann ein manuelles Sichten, Klassifizieren und/oder Ausrichten des Fasermaterials entfallen. Vorzugsweise weist das Positionierungselement hierzu eine Bilderkennung auf. Hierdurch lässt sich der Personalaufwand reduzieren, wodurch die Herstellung des faserverstärktem Verbundwerkstoffes kostengünstig realisierbar ist.

Entsprechend einer Weiterbildung weist das Fasermaterialmodul ein Trennelement, insbesondere eine Schnittwalze, zum Zuschneiden des Fasermaterials in Faserabschnitte auf, wobei vorzugsweise die Faserabschnitte Faserlängen größer als etwa 10 mm, besonders bevorzugt als etwa 50 mm, und am meisten bevorzugt als etwa 100 mm aufweisen. Somit werden gegebenenfalls unterschiedliche Geometrien des Fasermaterials auf eine definierte Größe zugeschnitten. Vorzugsweise weist das Fasermaterialmodul ein Separationselement, insbesondere ein Sieb, zum Aussortieren von Schnittresten auf. Somit werden die Schnittreste mittels des Separationselementes aus dem Fasermaterialmodul abgeführt. Lediglich die im Wesentlichen identisch großen Faserabschnitte werden der weiteren Verarbeitung zugeführt. Hierbei weisen die Faserabschnitte vorzugsweise eine Größe von mindestens 10 mm x 10 mm, besonders bevorzugt von mindestens 50 mm x 50 mm, und am meisten bevorzugt von mindestens 100 mm x 100 mm auf.

Weiter weist das Fasermaterialmodul nach einer weiteren Ausführungsform ein Vibrationselement zum Vereinzeln des Fasermaterials zu einzelnen Fasern, insbesondere Filamenten und/oder Rovings auf. Hierdurch lassen sich insbesondere Fasermaterialreste in der Gestalt von Gewebe- und/oder Gelegeresten zu gleichartigen einzelnen Fasern vereinzeln. Damit steht ein gleichartiges, homogenes Fasermaterial für die weitere Verarbeitung zur Verfügung.

Nach einer Weiterbildung weist das Fasermaterialmodul ein mit einer Vibrationstechnik ausgestattetes Ausrichtförderelement zum, insbesondere undirektionalen, Ausrichten und/oder Befördern von Fasermaterial, vorzugsweise einzelnen Fasern auf. Das mit einer geeigneten Vibrationstechnik ausgestattete Ausrichtförderelement ermöglicht es somit, das einerseits die einzelnen Fasern entsprechend einer gewünschten Vorzugsrichtung ausgerichtet und andererseits die Fasern gleichzeitig innerhalb des Fasermaterialmoduls in Richtung des nächsten Verarbeitungsschrittes befördert werden. Vorzugsweise sind das Förderelement, das Positionierungselement, das Trennelement, das Separationselement, das Vibrationselement und/oder das Ausrichtförderelement kaskadenartig hintereinander angeordnet, wobei eine Übergabe des Fasermaterials von einem Element auf das nachfolgende Element gewährleistet ist. Somit sind die einzelnen Elemente des Fasermaterialmoduls derart angeordnet, dass sich für das Fasermaterial ein kontinuierlicher Materialfluss von einem ersten der vorgenannten Elemente zu einem zweiten der vorgenannten Elemente gegeben ist.

Entsprechend einer weiteren Ausführungsform weist der Extruder eine Düse, insbesondere eine Breitschlitzdüse, auf. Derartige Düsen sind bewährt und leicht zu beschaffen.

Nach einer anderen Ausführungsform ist ein von dem Vibrationselement abgewandtes Ende des Ausrichtförderelementes stromabwärts und über der Düse angeordnet, wobei vorzugsweise der Abstand zwischen dem von dem Vibrationselement abgewandten Ende des Ausrichtförderelementes und der aus der Düse austretenden Polymerfolie möglichst gering ist. Somit fällt das Fasermaterial aufgrund der wirkenden Schwerkraft von dem Ausrichtförderelement auf die aus der Düse austretende Polymerfolie. Aufgrund des geringen Abstandes zwischen dem Ende des Ausrichtförderelementes und der aus der Düse austretenden Polymerfolie, der vorzugsweise nur wenige Millimeter beträgt, ist gewährleistet, dass die Fasern im Wesentlichen in ihrer Ausrichtung verbleiben. Eine Änderung der Orientierung bei einer zu großen Fallhöhe wird somit vermieden. Da sich die Polymerfolie beim Austritt aus der Düse noch im Schmelzezustand befindet, haftet das Fasermaterial auf der Polymerfolie. Weiter kann das Fasermaterial aufgrund der wirkenden Schwerkraft in die sich noch im Schmelzezustand befindende Polymerfolie eintauchen. Hierbei kann zugleich eine Imprägnierung des Fasermaterials mit dem Polymermaterial der Polymerfolie erfolgen.

Gemäß einer weiteren Ausführungsform ist dem Extruder ein Imprägnierelement, insbesondere eine Doppelbandpresse, zugeordnet, wobei vorzugsweise die Polymerfolie nach Zuführung des Fasermaterials das Imprägnierelement durchläuft. Somit ist eine vollständige Imprägnierung der Fasern des Fasermaterials gewährleistet. Vorzugsweise weist die erfindungsgemäße Vorrichtung ein Aufwickel- und/oder Laminierelement auf. Entsprechend dem vorgesehenen Einsatzzweck ist somit ein geeignetes Laminat herstellbar und/oder der hergestellte faserverstärkte Verbundwerkstoff kann als Halbzeug auf eine Rolle aufgewickelt werden. Als eine aufgewickelte Rolle lässt sich das Halbzeug auf einfache Weise lagern und/oder transportieren.

Von besonderem Vorteil ist ein faserverstärkter Verbundwerkstoff in der Gestalt eines Halbzeuges aus einer Polymerfolie und einem der Polymerfolie zugeführten Fasermaterial herstellbar durch ein erfindungsgemäßes Verfahren und/oder eine erfindungsgemäße Vorrichtung. Der neuartige faserverstärkte Verbundwerkstoff, die Organofolie, ist im Gegensatz beispielsweise zu Organoblechen auch im Tiefziehverfahren zu verarbeiten. Dies führt zu einer Vereinfachung und Kostenreduzierung bei der Verarbeitung von faserverstärkten Halbzeug zu faserverstärkten Bauteilen.

Das Halbzeug kann folienartig ausgebildet sein und ist vorzugsweise mehrlagig, insbesondere in einem einzigen Arbeitsschritt, vorteilhafterweise mittels eines Tiefziehverfahrens, zu einem Bauteil umformbar und/oder konsolidierbar. Bisher ist es bekannt, zunächst in einem ersten Arbeitsschritt ein Halbzeug aus einem faserverstärkten Verbundwerkstoff herzustellen. So werden beispielsweise zur Herstellung von Organoblechen Gewebe mit einem Matrixmaterial imprägniert. Hieran kann sich ein zweiter Arbeitsschritt anschließen, um aus dem Halbzeug mittels einer Konsolidierung eine Art Rohling oder Zwischenwerkstoff herzustellen. Beispielsweise werden die imprägnierten Gewebe zu Laminaten aufgebaut und konsolidiert. Hierdurch entsteht das Organoblech als ein Zwischenwerkstoff für die Herstellung des eigentlichen Bauteiles und/oder Endproduktes. Hierzu schließt sich ein dritter Arbeitsschritt an, bei dem der Zwischenwerkstoff bzw. Rohling durch Umformen, beispielsweise mittels eines Pressverfahrens, zu dem endgültigen Bauteil verarbeitet wird. Im Gegensatz hierzu ist das endgültige Bauteil bei Verwendung der Organofolie in lediglich zwei Arbeitsschritten herstellbar. Hierbei wird das Halbzeug in Form der Organofolie in einem ersten Arbeitsschritt gemäß dem erfindungsgemäßen Verfahren und/oder der erfindungsgemäßen Vorrichtung hergestellt. Diese Organofolie ist dann unmittelbar und ohne die Notwendigkeit der Herstellung eines Rohlings bzw. eines Zwischenwerkstoffes beispielsweise mittels eines Tiefziehverfahrens zu einem Bauteil umformbar und/oder konsolidierbar. Hieraus ergibt sich eine effektivere und kostengünstigere Herstellung von faserverstärkten Bauteilen.

Vorteilhaft ist die Verwendung eines, nach dem erfindungsgemäßen Verfahren hergestellten, faserverstärkten Verbundwerkstoffes zum Herstellen eines Laminates und/oder eines faserverstärkten Bauteils. Die Organofolie erweitert die möglichen Einsatzbereiche und begünstigt eine kostengünstige Herstellung von Bauteilen aus dem faserverstärktem Verbundwerkstoff.

Nachfolgend wird die Erfindung anhand von Ausführungsbeispielen mittels der folgenden Zeichnungen näher erläutert. Es zeigen:
- Fig. 1: eine perspektivische Seitenansicht der erfindungsgemäßen Vorrichtung,
- Fig. 2: eine perspektivische Seitenansicht von einzelnen Bestandteilen der erfindungsgemäßen Vorrichtung gemäß Fig. 1,
- Fig. 3: eine perspektivische Seitenansicht eines Fasermaterialmoduls und
- Fig. 4: ein schematisches Ablaufdiagramm zum erfindungsgemäßen Verfahren.

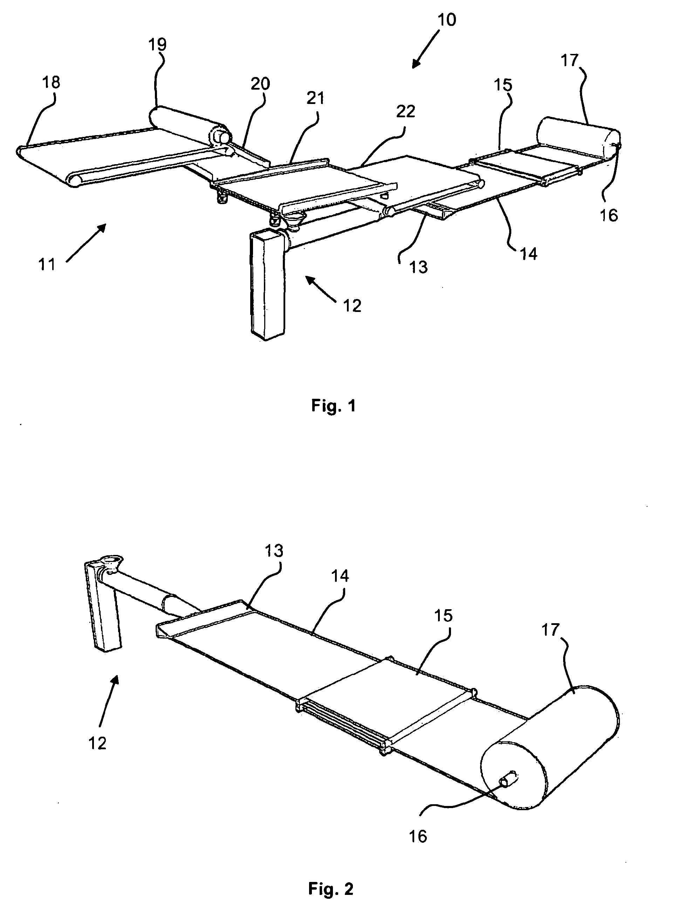

Fig. 1 zeigt eine perspektivische Seitenansicht einer erfindungsgemäßen Vorrichtung 10. Die Vorrichtung 10 weist ein Fasermaterialmodul 11 und einen Extruder 12 auf. An dem Extruder 12 ist eine Düse 13 angeordnet, wobei die Düse 13 als eine Breitschlitzdüse 13 ausgebildet ist. Aus der Düse 13 tritt eine sich noch im Schmelzezustand befindende Polymerfolie 14 aus. Bei dem für die Herstellung für die Polymerfolie 14 verwendeten Thermoplastmaterial handelt es sich um Polypropylen.

Die Polymerfolie 14 durchläuft ein Imprägnierelement 15, welches als eine Doppelbandpresse ausgebildet ist. Hiernach wird die Polymerfolie 14 mittels eines Aufwickelelementes 16 zu einer Rolle 17 aufgewickelt.

Das Fasermaterialmodul 11 weist ein Förderelement 18 auf, welches als ein Förderband 18 ausgebildet ist. Ein erstes Ende des Förderelementes 18 ist vorgesehen, um nicht näher dargestelltes Fasermaterial auf das Förderelement 18 aufzulegen. Von dem ersten Ende des Förderelementes 18 in Förderrichtung des Förderelementes 18 abgewandt ist an einem zweiten Ende des Förderelementes 18 ein Trennelement 19 angeordnet. Das Trennelement 19 ist als eine Schnittwalze ausgebildet und liegt auf dem zweiten Ende des Förderelementes 18 auf. Das Trennelement 19 weist Messer bzw. Schneidkanten in Umfangs - und Achsrichtung auf. Hierbei sind die Schneidkanten derart angeordnet, dass ein Fasermaterial in Gewebe- und/oder Gelegequadrate bzw. Faserabschnitte mit einer Größe von etwa 100 mm x 100 mm zerschnitten wird.

Neben und unterhalb des Förderelementes 18 und des Trennelementes 19 ist ein Separationselement 20 angeordnet. Das Separationselement 20 ist als ein Sieb 20 ausgebildet, wobei über Vibrationen Schnittabfälle, die nicht die gewünschte Größe von ca. 100 mm x 100 mm aufweisen aussortierbar und abführbar sind. Dabei fallen die Schnittabfälle durch das Separationselement 20 hindurch, sodass lediglich Gewebe- und/oder Gelegequadrate mit einer Größe von etwa 100 mm x 100 mm an das nachfolgende Vibrationselement 21 weitergeführt werden.

Mittels des Vibrationselementes 21 sind die als Gewebe- und/oder Gelegequadrate ausgebildeten Faserabschnitte zu einzelnen Fasern vereinzelbar. An einem dem Separationselement 20 abgewandten Ende des Vibrationselementes 21 ist neben und unterhalb des Vibrationselementes 21 ein Ausrichtförderelement 22 angeordnet. Mittels des Ausrichtförderelementes 22 werden die einzelnen Fasern entsprechend einer bestimmten Vorzugsrichtung ausgerichtet und zugleich in Richtung eines von dem Vibrationselement 21 abgewandten Endes des Ausrichtförderelementes 22 befördert. Dieses von dem Vibrationselement 21 abgewandte Ende des Ausrichtförderelementes 22 ist mit einem Abstand von wenigen Millimetern über der Düse 13 angeordnet.

Fig. 2 zeigt eine perspektivische Seitendarstellung von Bestandteilen der erfindungsgemäßen Vorrichtung gemäß Fig. 1. Hierbei zeigt Fig. 2 den Extruder 12 mit der Düse 13 und der aus der Düse 13 austretenden Polymerfolie 14. Von der Düse 13 erstreckt sich die Polymerfolie 14 stromabwärts in Richtung des Imprägnierelementes 15. Die Polymerfolie 14 durchläuft das als Doppelbandpresse 15 ausgebildete Imprägnierelement 15 stromabwärts und wird schließlich mittels des Aufwickelelementes 16 zu der Rolle 17 aufgewickelt.

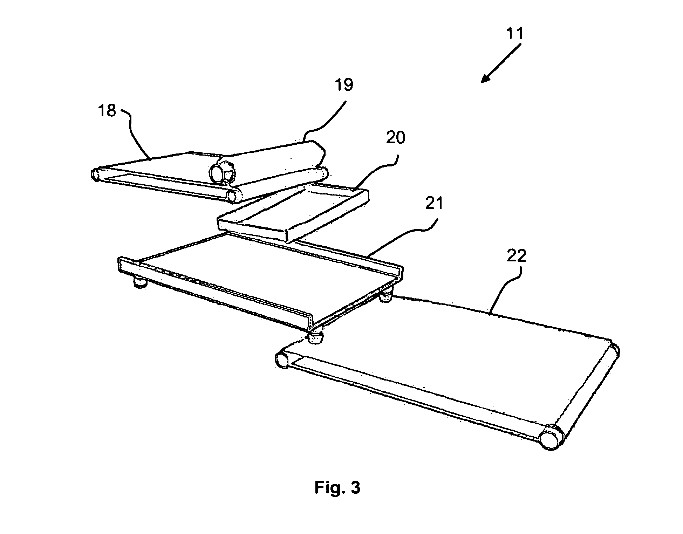

Fig. 3 zeigt eine perspektivische Seitenansicht des Fasermaterialmoduls 11 gemäß Fig. 1. Die Förderrichtung des Förderelementes 18 bestimmt die Hauptförderrichtung des Fasermaterials. Das Fasermaterial wird von einem ersten Ende des Förderelementes 18 in Richtung des zweiten Endes des Förderelementes 18, das dem Trennelement 19 zugeordnet ist, in Hauptförderrichtung des Fasermaterials befördert. Nach dem Zuschneiden des Fördermaterials durch das Trennelement 19 fällt das Fasermaterial in das Separationselement 20. Mittels Vibrationen wird das Fasermaterial von Schnittabfällen getrennt und rechtwinklig zur Hauptförderrichtung in Richtung des Vibrationselement 21 befördert. Mittels des Vibrationselementes 21 werden die Gewebe- und/oder Gelegematerialien zu einzelnen Fasern vereinzelt und in Hauptförderrichtung in Richtung des Ausrichtförderelementes 22 befördert. Das Ausrichtförderelement 22 weist einzelne Vibrationsförderrinnen in Längsrichtung zur Hauptförderrichtung auf. Hierdurch werden die Fasern, die von dem Vibrationselement 21 an das Ausrichtförderelement 22 übergeben wurden, in Hauptförderungsrichtung ausgerichtet und in Richtung des von dem Vibrationselement abgewandten Endes des Ausrichtförderelementes 22 befördert.

Alternativ ist das Fasermaterialmodul 11 auch als unabhängige und eigenständige Ausführung einer Vorrichtung zum Wiederverwerten von Fasermaterialresten, insbesondere Gewebe - und/oder Gelegeresten, denkbar.

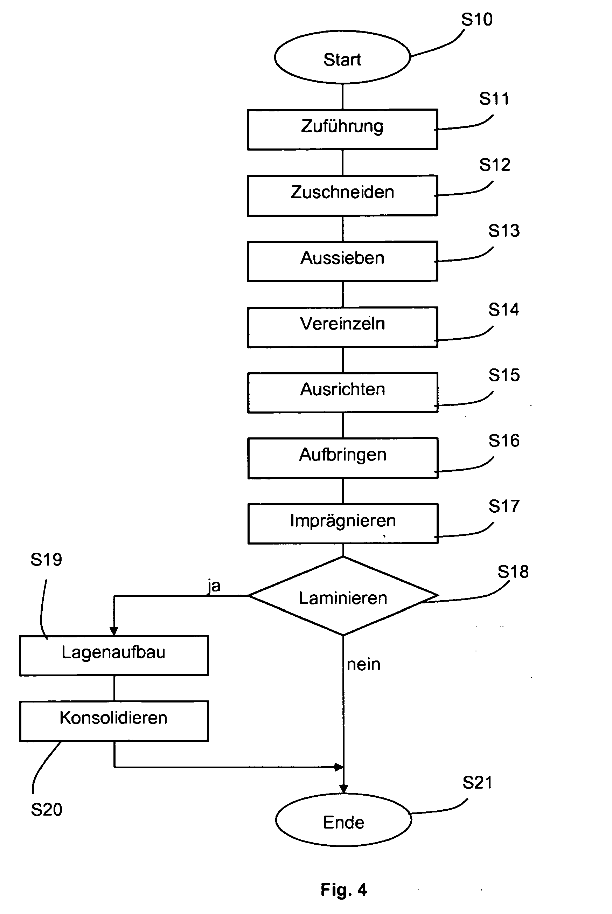

Fig. 4 zeigt ein schematisches Ablaufschema eines erfindungsgemäßen Verfahrens. Mit einem Schritt S10 wird das Verfahren gestartet. Hierauf erfolgt in einem Schritt S11 1 eine Zuführung des Fasermaterials. Diese Zuführung kann mehrere Unterschritte beinhalten. Bei der Verwendung von Fasematerialresten kann es notwendig sein, dass die Fasermaterialreste zunächst manuell gesichtet und klassifiziert werden. Demnach wird zunächst entschieden, welche Fasermaterialreste für das erfindungsgemäße Verfahren geeignet sind. Die neuwertigen und/oder wieder zu verwertenden Fasermaterialreste können manuell und/oder automatisch in Längsrichtung zur Hauptförderrichtung ausgerichtet werden. Hierdurch werden unnötige Schnittabfälle vermieden und der Aufwand für nachfolgende Ausrichtschritte wird reduziert. Im vorliegenden Ausführungsbeispiel werden Fasermaterialreste mit ihren Fasern in Längsrichtung zur Hauptförderrichtung auf das Förderelement 18 aufgelegt. Mittels des Förderelementes 18 werden die Fasermaterialreste in Richtung des Trennelementes 19 befördert.

Es folgt in einem Schritt S12 das Zuschneiden der Fasermaterialreste mittels des Trennelementes 19 auf eine Größe von 100 mm x 100 mm. Hiernach folgt in einem Schritt S13 das Aussieben von Schnittabfällen, die nicht der vorgesehenen Größe entsprechen. Die verbleibenden Faserabschnitte werden in einem Schritt S14 sodann zu einzelnen Fasern aufgelöst bzw. vereinzelt. Dieses Vereinzeln erfolgt mittels des Vibrationselementes 21. Sodann werden die einzelnen Fasern in einem Schritt S15 ausgerichtet. Entsprechend der konkreten Ausführungsform der Vorrichtung 10 erfolgt die Ausrichtung der Fasern in Längsrichtung zur Hauptförderrichtung. Nach dem Ausrichten erfolgt in einem Schritt S16 das Aufbringen der Fasern auf die Polymerfolie 14. Zur vollständigen Imprägnierung der Fasern erfolgt sodann in einem Schritt S17 das Imprägnieren mittels des Imprägnierelementes 15. In einem hierauf folgenden Schritt S18 muss entschieden werden, ob ein Laminieren erfolgen soll oder nicht. Wird im Schritt S18 festgelegt, dass ein Laminieren erfolgen soll, wird in einem Schritt S19 ein Lagenaufbau durchgeführt. Je nach Verwendungszweck können entsprechende Laminate mit unterschiedlichen Dicken bzw. Materialstärken und/oder unterschiedlichen Faserorientierungen hergestellt werden. Anschließend an den Lagenaufbau gemäß Schritt S19 erfolgt in einem Schritt S20 das Konsolidieren des Laminates. Hierdurch erfolgt eine Verdichtung des Laminates einschließlich der Entfernung von Lufteinschlüssen und anderen unerwünschten gasförmigen Substanzen. Nach der Beendigung der Konsolidierung gemäß des Schrittes S20 wird das Herstellungsverfahren in Schritt S21 beendet. Wird in Schritt S18 dagegen entschieden, dass kein Laminieren erfolgen soll, ist die Herstellung des faserverstärkten Verbundwerkstoffes mit dem dann direkt folgenden Schritt S21 abgeschlossen. Nach Beendigung des eigentlichen Herstellungsverfahrens kann der Verbundwerkstoff mittels eines Aufwickelelementes 16 zu einer Rolle 17 aufgerollt werden.

Mittels des erfindungsgemäßen Verfahrens und/oder der erfindungsgemäßen Vorrichtung ist ein neuartiger faserverstärkter Verbundwerkstoff, eine so genannte Organofolie, herstellbar. Insbesondere im Vergleich zu den Organoblechen ergibt sich ein einfacherer und effizienterer Herstellungsprozess. Die Herstellung ist insgesamt deutlich kostengünstiger, da einerseits die Anlagenkosten geringer sind und andererseits die Fasermaterialkosten ganz erheblich reduzierbar sind, da Fasermaterialreste verwendbar sind. So kann der Einsatz von Organofolien auf Basis rezyklierter Kohlenstofffasern eine kostengünstige Anwendungserweiterung der bekannten Organobleche darstellen. Hierbei sind die Halbzeugkosten sehr gering, da als Ausgangsfasermaterial Abfälle und Verschnitte aus Nasslaminierungsfasern genutzt werden. Zudem ist Polypropylen ein vergleichsweise günstiges Polymer.

Alternativ lässt sich aber auch jedes andere geeignete thermoplastische Material verwenden.

Weiter ist von Vorteil, dass durch die Vorzugsorientierung der Langfasern belastungsoptimierte Bauteile gefertigt werden können, mit denen sich beispielsweise Leichtbauten realisieren lassen. Organofolien sind sowohl in Tiefziehverfahren als auch in Pressverfahren zu endgültigen Bauteilen verarbeitbar. Organofolien können beispielsweise metallische Verkleidungsbleche oder Strukturbauteile, insbesondere in der Verkehrstechnik, substituieren. Des Weiteren ermöglichen Organofolien beispielsweise in der Orthopädie die Herstellung hochsteifer orthopädischer Prothesen, Orthesen oder Bandagen. Bei der Herstellung von Großbauteilen aus Kohlenstofffasern, beispielsweise Rotorblätter für Windenergieanlagen und/oder Flugzeugseitenleitwerke, können die schweren Metallformen durch Organofolien ersetzt werden. Hierbei ist zudem von Vorteil, dass die Organofolien die gleiche Wärmeausdehnung aufweisen, wie das spätere Bauteil.

Zusammenfassend ergibt sich somit ein vergleichsweise einfaches Herstellungsverfahren für einen qualitativ hochwertigen faserverstärkten Verbundwerkstoff, der Langfasern enthält, wobei diese Langfasern aus Fasermaterialresten gewonnen werden können.

### Bezugszeichenliste:

- 10: Vorrichtung
- 11: Fasermaterialmodul
- 12: Extruder
- 13: Düse
- 14: Polymerfolie
- 15: Imprägnierelement
- 16: Aufwickelelement
- 17: Rolle
- 18: Förderelement
- 19: Trennelement
- 20: Separationselement
- 21: Vibrationselement
- 22: Ausrichtförderelement

- S10: Start
- S11: Zuführung
- S12: Zuschneiden
- S13: Aussieben
- S14: Vereinzeln
- S15: Ausrichten
- S16: Aufbringen
- S17: Imprägnieren
- S18: Laminieren
- S19: Lagenaufbau
- S20: Konsolidieren
- S21: Ende

## Patentansprüche

1. Verfahren zum Herstellen eines faserverstärkten Verbundwerkstoffes, bei dem ein Fasermaterial bereit gestellt wird, bei dem eine Polymerfolie (14) bereit gestellt wird, und bei dem das Fasermaterial der Polymerfolie (14) zugeordnet wird, **dadurch gekennzeichnet, dass** das Fasermaterial in der Ausbildung als einzelne Fasern mit einem Ausrichtförderelement (22) mittels Vibrationen ausgerichtet wird, und dass das der Polymerfolie (14) zugeführte Fasermaterial mittels eines Imprägnierelementes (15) imprägniert wird.

2. Verfahren nach Anspruch 1, **dadurch gekennzeichnet, dass** das Fasermaterial der sich aufgrund der Herstellung noch im Schmelzezustand befindenden Polymerfolie (14) zugeführt wird, und/oder dass das Fasermaterial unmittelbar nach dem Erzeugen der Polymerfolie, insbesondere direkt nach dem Austritt aus einer Düse (13) eines Extruders (12), auf die Polymerfolie (14) aufgebracht wird.

3. Verfahren nach Anspruch 1 oder 2, **dadurch gekennzeichnet, dass** eine Zwischenfixierung des ausgerichteten Fasermaterials auf der Polymerfolie (14), insbesondere vor dem Imprägnieren mittels des Imprägnierelementes (15), mittels Adhäsion, elektrostatisch oder mittels eines Sprühklebers erreicht wird.

4. Verfahren nach einem der vorhergehenden Ansprüche, **dadurch gekennzeichnet, dass** das Fasermaterial einem Förderelement (18), insbesondere einem Förderband, zugeführt wird, und/oder dass das Fasermaterial manuell und/oder automatisch, insbesondere in Längsrichtung zur Förderrichtung des Förderelementes (18), ausgerichtet wird.

5. Verfahren nach einem der vorhergehenden Ansprüche, **dadurch gekennzeichnet, dass** zum Herstellen der Polymerfolie (14) ein Thermoplastmaterial, insbesondere Polypropylen und/oder Polyamid, verwendet wird.

6. Verfahren nach einem der vorhergehenden Ansprüche, **dadurch gekennzeichnet, dass** als Fasermaterial Glasfasern, Kohlefasern, Aramidfasern und/oder zum Wiederverwerten Fasermaterlalreste, insbesondere Gewebereste und/oder Gelegereste, verwendet werden.

7. Verfahren nach einem der vorhergehenden Ansprüche, **dadurch gekennzeichnet, dass** lediglich bestimmten Segmenten der Polymerfolie (14) das Fasermaterial zugeführt wird.

8. Vorrichtung zum Herstellen eines faserverstärkten Verbundwerkstoffes nach einem Verfahren nach einem der vorhergehenden Ansprüche mit einem Fasermaterialmodul (11) zum Aufbringen eines Fasermaterials auf eine Polymerfolie (14), **dadurch gekennzeichnet, dass** das Fasermaterialmodul (11) ein mit einer Vibrationstechnik ausgestattetes Ausrichtförderelement (22) mit in Längsrichtung zur Hauptförderrichtung ausgerichteten Vibrationsrinnen zum Ausrichten des als einzelne Fasern ausgebildeten Fasermaterials aufweist, und dass ein dem Fasermaterialmodul (11) nachgeschaltetes Imprägnierelement (15) vorgesehen ist, wobei die Polymerfolie (14) nach Zuführung des Fasermaterials das Imprägnierelement (15) durchläuft.

9. Vorrichtung nach Anspruch 8, **dadurch gekennzeichnet, dass** das Fasermaterialmodul (11) ein Förderelement (18), insbesondere ein Förderband, aufweist.

10. Vorrichtung nach einem der Ansprüche 8 oder 9, **dadurch gekennzeichnet, dass** das Fasermaterialmodul (11) ein Trennelement (19), insbesondere eine Schnittwalze, zum Zuschneiden des Fasermaterials in Faserabschnitte aufweist, wobei vorzugsweise die Faserabschnitte Faserlängen größer als etwa 10 mm, besonders bevorzugt als etwa 50 mm, und am meisten bevorzugt als etwa 100 mm aufweisen.

11. Vorrichtung nach einem der Ansprüche 8 bis 10, **dadurch gekennzeichnet, dass** das Fasermaterialmodul (11) ein Separationselement (20), insbesondere ein Sieb, zum Aussortieren von Schnittresten aufweist, und/oder dass das Fasermaterialmodul (11) ein Vibrationselement (21) zum Vereinzeln des Fasermaterials zu einzelnen Fasern, insbesondere Filamenten und/oder Rovings, aufweist.

12. Vorrichtung nach einem der Ansprüche 8 bis 11, **dadurch gekennzeichnet, dass** das Förderelement (18), das Trennelement (19), das Separationselement (20), das Vibrationselement (21) und/oder das Ausrichtförderelement (22) kaskadenartig hintereinander angeordnet sind, wobei eine Übergabe des Fasermaterials von einem Element auf das nachfolgende Element gewährleistet ist.

13. Vorrichtung nach Anspruch 12, **dadurch gekennzeichnet, dass** ein von dem Vibrationselement (21) abgewandtes Ende des Ausrichtförderelementes (22) stromabwärts und über einer Düse (13) eines Extruders (12) angeordnet ist, wobei vorzugsweise der Abstand zwischen dem von dem Vibrationselement (21) abgewandten Ende des Ausrichtförderelementes (22) und der aus der Düse (13) austretenden Polymerfolie (14) möglichst gering ist.

14. Verwendung eines faserverstärkten Verbundwerkstoffes nach einem der vorhergehenden Ansprüche zum Herstellen eines Laminates und/oder eines faserverstärkten Bauteils.

## Claims

1. Method for manufacturing a fibre-reinforced composite material in which method a fibrous material is made available, in which a polymer film (14) is made available, and in which the fibrous material is associated with the polymer film (14), **characterised in that** the fibrous material is aligned in the formation as individual fibres by means of vibrations with an orienting conveying element (22), and that the fibrous material fed to the polymer film (14) is impregnated by means of an impregnating element (15).

2. Method according to claim 1, **characterised in that** the fibrous material is fed to the polymer film (14) that as a consequence of the production is still present in the molten state, and/or that the fibrous material is applied onto the polymer film (14) directly after the polymer film has been produced, in particular directly after its exit from a die (13) of an extruder (12).

3. Method according to claim 1 or 2, **characterised in that** the aligned fibrous material is pre-positioned on the polymer film (14) by means of adhesion, electrostatically or by means of a spray adhesive, in particular prior to impregnation by means of the impregnation element (15).

4. Method according to one of the previous claims, **characterised in that** the fibrous material is fed to a conveying element (18), in particular a conveyor belt, and/or that the fibrous material is manually and/or automatically oriented, in particular in the longitudinal direction to the conveying direction of the conveying element (18).

5. Method according to one of the previous claims, **characterised in that** a thermoplastic material, in particular polypropylene and/or polyamide, is used for manufacturing the polymer film (14).

6. Method according to one of the previous claims, **characterised in that** glass fibres, carbon fibres, aramid fibres are used as the fibrous material and/or fabric remnants and/or web remnants in particular are used for recycling fibrous material remnants.

7. Method according to one of the previous claims, **characterised in that** the fibrous material is fed only to certain segments of the polymer film (14).

8. Device for manufacturing a fibre-reinforced composite material according to a method of one of the previous claims with a fibrous material module (11) for depositing a fibrous material onto a polymer film (14), **characterised in that** the fibrous material module (11) possesses an orienting conveying element (22) equipped with a vibration unit with vibration channels that are oriented in the longitudinal direction to the main conveying direction so as to align the fibrous material that is formed as individual fibres, and that an impregnation element (15) is provided downstream of the fibrous material module (11), wherein the polymer film (14), after having been supplied with the fibrous material, passes through the impregnation element (15).

9. Device according to claim 8, **characterised in that** the fibrous material module (11) possesses a conveying element (18), in particular a conveyor belt.

10. Device according to one of claims 8 or 9, **characterised in that** the fibrous material module (11) possesses a separation element (19), in particular a cutting roll, for cutting up the fibrous material into sections of fibre, wherein the fibre lengths of the sections of fibre are preferably greater than about 10 mm, particularly preferably than about 50 mm, and most preferably than about 100 mm.

11. Device according to one of claims 8 to 10, **characterised in that** the fibrous material module (11) possesses a separation element (20), in particular a sieve, for removing off-cuts, and/or that the fibrous material module (11) possesses a vibrating element (21) for separating the fibrous material into single fibres, in particular into filaments and/or rovings.

12. Device according to one of claims 8 to 11, **characterised in that** the conveying element (18), the separating element (19), the separation element (20), the vibrating element (21) and/or the orienting conveying element (22) are arranged one behind the other in a cascade-like arrangement, wherein a transfer of the fibrous material from one element to the next element is ensured.

13. Device according to claim 12, **characterised in that** one end of the orienting conveying element (22) facing away from the vibrating element (21) is arranged downstream and above a die (13) of an extruder (12), wherein the distance between the end of the orienting conveying element (22) facing away from the vibrating element (21) and that of the polymer film (14) exiting the die (13) is preferably as short as possible.

14. Use of a fibre-reinforced composite material according to one of the previous claims for manufacturing a laminate and/or a fibre-reinforced component.

## Revendications

1. Procédé à fabriquer un matériau composite renforcé par des fibres, dans lequel une matière fibreuse est mis à disposition, dans lequel une feuille en polymère (14) est mise à disposition, et dans lequel ladite matière fibreuse est affectée à ladite feuille en polymère (14), **caractérisé en ce que** ladite matière fibreuse en formation de fibres individuelles est orientée par vibrations moyennant un élément convoyeur d'orientation (22), et **en ce que** ladite matière fibreuse amené à ladite feuille en polymère (14) est imprégnée moyennant un élément pour l'imprégnation (15).

2. Procédé selon la revendication 1, **caractérisé en ce que** ladite matière fibreuse est amenée à ladite feuille en polymère (14) qui est encore à l'état fondu en vertu de la fabrication, et/ou **en ce que** ladite matière fibreuse est appliquée sur ladite feuille en polymère (14) directement après la production de ladite feuille en polymère, en particulier directement après sa sortie d'une filière (13) d'une extrudeuse (12).

3. Procédé selon la revendication 1 ou 2, **caractérisé en ce qu'**une fixation intermédiaire de la matière fibreuse orientée sur ladite feuille en polymère (14) est atteinte, en particulier avant l'imprégnation, moyennant ledit élément pour l'imprégnation (15), par adhésion, de manière électrostatique ou moyennant une colle pulvérisée.

4. Procédé selon une quelconque des revendications précédentes, **caractérisé en ce que** ladite matière fibreuse est amenée à un élément convoyeur (18), en particulier un transporteur à bande, et/ou **en ce que** ladite matière fibreuse est orientée de façon manuelle et/ou automatique, en particulier le long de la direction longitudinale relativement au sens de transport dudit élément convoyeur (18).

5. Procédé selon une quelconque des revendications précédentes, **caractérisé en ce qu'**une matière thermoplastique, en particulier du polypropylène et/ou du polyamide, est utilisée pour la fabrication de ladite feuille en polymère (14).

6. Procédé selon une quelconque des revendications précédentes, **caractérisé en ce que** des fibres de verre, des fibres de carbone, des fibres d'aramide sont utilisées en tant que matière fibreuse et/ou de matière fibreuse résiduaire, en particulier des queues de tissu et/ou des pièces textiles pliées résiduelles.

7. Procédé selon une quelconque des revendications précédentes, **caractérisé en ce que** ladite matière fibreuse n'est amenée qu'aux segments déterminés de ladite feuille en polymère (14).

8. Dispositif à fabriquer un matériau composite renforcé par des fibres selon un procédé selon une quelconque des revendications précédentes, comprenant un module (11) à matière fibreuse pour l'application d'une matière fibreuse sur une feuille en polymère (14), **caractérisé en ce que** ledit module à matière fibreuse (11) comprend un élément convoyeur d'orientation (22) muni d'un système de vibration et ayant des chenaux vibrateurs orientés le long de la direction longitudinal relativement au sens de transport principal pour l'orientation de ladite matière fibreuse sous forme des fibres individuelles, et **en ce qu'**un élément pour l'imprégnation (15) est disposé en aval dudit module à matière fibreuse (11), dans lequel ladite feuille en polymère (14) passe à travers ledit élément pour l'imprégnation (15) suivant l'amenée de ladite matière fibreuse.

9. Dispositif selon la revendication 8, **caractérisé en ce que** ledit module à matière fibreuse (11) comprend un élément convoyeur (18), en particulier un convoyeur à bande.

10. Dispositif selon une quelconque des revendications 8 ou 9, **caractérisé en ce que** ledit module à matière fibreuse (11) comprend un élément séparateur (19), en particulier un rouleau de découpage, pour le coupage de ladite matière fibreuse en segments de fibres, dans lequel, de préférence, les segments de fibres présentent des longueurs de fibre de plus que 10 mm environ, et de manière plus préférée plus que 50 mm environ, et de manière la plus préférable que 100 mm environ.

11. Dispositif selon une quelconque des revendications 8 à 10, **caractérisé en ce que** ledit module à matière fibreuse (11) comprend un élément de séparation (20), en particulier un tamis, pour l'extraction des résidus de coupage, et/ou en ce que ledit module à matière fibreuse (11) comprend un élément vibrateur (21) pour l'individualisation de ladite matière fibreuse en fibres individuelles, en particulier des filaments et/ou des pièces dites rovings.

12. Dispositif selon une quelconque des revendications 8 à 11, **caractérisé en ce que** ledit élément convoyeur (18), ledit élément séparateur (19), ledit élément de séparation (20), ledit élément vibrateur (21) et/ou ledit élément convoyeur d'orientation (22) sont disposés l'un derrière l'autre en cascade, dans lequel un transfert de ladite matière fibreuse d'un élément à l'élément suivant est assuré.

13. Dispositif selon la revendication 12, **caractérisé en ce qu'**une extrémité dudit élément convoyeur d'orientation (22), qui est opposée audit élément vibrateur (21), est disposé en aval et au-dessus d'une filière (13) d'une extrudeuse (12), dans lequel, de préférence, l'écart entre ladite extrémité opposée audit élément vibrateur (21) dudit élément convoyeur d'orientation (22) et la feuille en polymère (14), qui sort de ladite filière (13), est aussi petit que possible.

14. Utilisation d'un matériau composite renforcé par des fibres selon une quelconque des revendications précédentes pour la fabrication d un aggloméré laminé et/ou d'un élément structurel préfabriqué renforcé par des fibres.
